# EUROPÄISCHE PATENTANMELDUNG

(11) **EP 0 794 501 A2**
(43) Veröffentlichungstag der Anmeldung: **10.09.1997**
(21) Anmeldenummer: 97200524.3
(22) Anmeldetag: 25.02.1997
(51) Int. Cl.: G06K 7/10

(54) **Verfahren zum Übertragen von Informationen sowie Basisstation zum Empfangen von Informationen**

(30) Priorität: 05.03.1996 DE 19608451
(71) Anmelder: Philips Patentverwaltung GmbH, 22335 Hamburg (DE); Philips Electronics N.V., 5621 BA Eindhoven (NL)
(72) Erfinder: Einfeldt, Walter, Röntgenstrasse 24, 22335 Hamburg (DE); Kirchner, Alexander, Röntgenstrasse 24, 22335 Hamburg (DE); Tobergte, Wolfgang, Dr., Röntgenstra e 24, 22335 Hamburg (DE)
(74) Vertreter: Poddig, Dieter, Dipl.-Ing.

(57) **Zusammenfassung**

Die kontaktlose Informationsübertragung von einem passiven Transponder zu einer Basisstation erfolgt in bekannter Weise durch Belastungsmodulation im Transponder. Die Spulen von Schwingkreisen in der Basisstation und im Transponder sind induktiv miteinander gekoppelt, wobei beide Schwingkreise möglichst gut auf die Trägerfrequenz der Basisstation abgestimmt sind, so daß sich die Belastungsmodulation des Schwingkreises im Transponder auf den Strom im Schwingkreis der Basisstation auswirkt. Da in praktischen Fällen die beiden Schwingkreise häufig nicht exakt aufeinander abgestimmt sind und der Transponder während der Informationsübertragung auch bewegt werden kann, kann es sein, daß bei der üblichen Demodulation in der Basisstation kein Signal zurückgewonnen wird. Erfindungsgemäß wird daher vorgeschlagen, in der Basisstation aus dem Antennensignal Imaginärteil und Realteil bzw. verschiedene Kombinationen davon getrennt zu demodulieren und über eine Logikschaltung miteinander zu verknüpfen, die insbesondere eine gegenseitige Verriegelung der beiden Kanäle bewirkt. Dadurch ist eine zuverlässigere Rückgewinnung der vom Transponder übertragenen Information in der Basisstation möglich.

## Beschreibung

Die Erfindung betrifft die kontaktlose Übertragung von Informationen von einem passiven Transponder, der keine eigene Energiequelle enthält, zu einer Basisstation über nur eine Spule auf jeder Seite. Über diese Spule werden sowohl die Informationen als auch die Energie für den Betrieb des Transponders übertragen, wobei davon ausgegangen wird, daß der Transponder einen nichtflüchtigen Speicher enthält. Die Übertragung von Informationen vom Transponder zur Basisstation geschieht dabei dadurch, daß im Transponder eine schaltbare Impedanz an die Spule angeschlossen ist, die entsprechend der zu übertragenden Information geschaltet wird, und in der Basisstation wird die Rückwirkung der geschalteten Impedanz des Transponders auf die Spule ausgewertet.

Ein entsprechendes Verfahren ist bekannt aus der DE 32 42 551 C2. Zweckmäßig ist dabei im Transponder die Spule Teil eines Schwingkreises, der auf die von der Basisstation abgestrahlte Frequenz abgestimmt ist, damit u.a. auch eine möglichst gute Energieübertragung von der Basisstation zum Transponder stattfindet. Durch die schaltbare Impedanz im Transponder tritt eine Amplitudenmodulation des Signals in der Basisstation auf, die dadurch sowohl als Sende- als auch als Empfangsantenne wirkt.

Es hat sich nun herausgestellt, daß in der Basisstation abhängig davon, wie gut der Schwingkreis im Transponder auf die Frequenz der Basisstation abgestimmt ist, und abhängig davon, ob der Transponder während der Informationsübertragung relativ zur Basisstation bewegt wird, und abhängig von weiteren Einflüssen in der Basisstation nicht nur eine reine Amplitudenmodulation des Signals in der Antennenspule der Basisstation auftritt, sondern es kann zusätzlich eine Phasenmodulation auftreten, und unter bestimmten Bedingungen kann die Amplitudenmodulation auch praktisch ganz verschwinden bzw. sich umkehren. Bei Auswertung nur der Amplitudenmodulation des Signals in der Antennenspule der Basisstation ist also nicht unter allen Umständen eine zuverlässige Übertragung von Informationen von dem Transponder zur Basisstation möglich.

Aufgabe der Erfindung ist es, ein Verfahren zur Übertragung von Informationen von einem passiven, mit Belastungsmodulation arbeitenden Transponder zu einer Basisstation anzugeben, bei der auch unter ungünstigen Umständen eine möglichst zuverlässige Übertragung von Informationen möglich ist.

Diese Aufgabe wird erfindungsgemäß durch ein Verfahren gelöst, bei dem aus dem Antennensignal der Basisstation zwei verschiedene Kombinationen von Realteil und Imaginärteil des Antennensignals getrennt demoduliert werden und diese Anteile getrennt digitalisiert werden und durch logische Verknüpfung der beiden digitalisierten Anteile die übertragene Information des Transponders zurückgewonnen wird. Da unter allen Umständen entweder wenigstens eine Amplitudenmodulation oder eine Phasenmodulation in der Antennenspule der Basisstation auftritt, ist sichergestellt, daß bei dem erfindungsgemäßen Verfahren unter praktisch allen Umständen ein demoduliertes Signal in wenigstens einem der beiden demodulierten Anteile auftritt, im Normalfall in beiden Anteilen. Durch eine logische Verknüpfung beider Anteile kann dann in praktisch jedem Fall die übertragene Information zurückgewonnen werden.

Aus der DE 31 46 280 C2 ist ein Demodulator für winkel- und amplitudenmodulierte Signale bekannt, bei dem ebenfalls zwei verschiedene Kombinationen von Realteil und Imaginärteil des Antennensignals getrennt demoduliert werden. Beide Anteile werden jedoch analog quadriert und beide quadrierten Anteile algebraisch summiert, um die Hüllkurve des modulierten Signals bzw. dessen Quadrat zu ermitteln.

Die logische Verknüpfung der beiden digitalisierten Anteile des demodulierten Antennensignals kann auf verschiedene Weise gebildet werden. Eine besonders zuverlässige und störsichere Rückgewinnung der übertragenen Information wird dadurch erreicht, daß aus den Flanken beider digitalisierten demodulierten Anteile des Antennensignals Impulse gebildet werden und der bezüglich einer Flanke des demodulierten Signals früher auftretende Impuls des einen Anteils den folgenden Impuls des anderen Anteils sperrt, wobei aus dem nicht gesperrten Impuls die übertragene Information abgeleitet wird. Dadurch wird vermieden, daß sich um eine kurze Zeitdifferenz gegeneinander verschobene Flanken aus beiden Signalen, die beispielsweise durch unterschiedliche Intensität beider demodulierten Anteile entstehen können, fälschlich zwei Impulse aus einem empfangenen Impuls zurückgewonnen werden. Wesentlich ist dabei, daß bei jedem empfangenen Impuls immer die zuerst auftretende Flanke ausgewertet wird, d.h., daß automatisch und dynamisch zwischen den beiden Anteilen umgeschaltet wird. Die Auswertung der Flanken der empfangenen demodulierten Impulse ist besonders zweckmäßig bei einer Biphasen-Codierung.

Die Demodulation von zwei verschiedenen Kombinationen von Realteil und Imaginärteil des Antennensignals erfolgt am einfachsten durch zwei gegeneinander um einen Teil einer ganzen Trägerschwingung gegeneinander phasenverschobenen Trägersignalen. Zweckmäßig wird das Trägersignal selbst sowie ein um 90° dagegen phasenverschobenes Signal verwendet. Auf diese Weise wird weitgehend einerseits nur Realteil und andererseits nur Imaginärteil des Antennensignals demoduliert.

Eine Basisstation, die nach dem Prinzip des erfindungsgemäßen Verfahrens arbeitet, enthält einen Trägersignal-Generator, eine Antennenspule und eine damit gekoppelte Demodulatoranordnung, und im Transponder ist ebenfalls eine Antennenspule, eine damit gekoppelte steuerbare Impedanz und eine Steueranordnung zur Ansteuerung der Impedanz vorgesehen. Dabei weist die Demodulatoranordnung zwei Zweige zum Demodulieren unterschiedlicher Kombinationen von Realteil und Imaginärteil des Antennensignals, einen Diskriminator zum Erzeugen eines binären Signals aus dem demodulierten Signal und einen Entscheider zum Kombinieren der binären Signale aus beiden Zweigen auf.

Ausführungsbeispiele der Erfindung werden nachfolgend anhand der Zeichnung näher erläutert. Es zeigen:
Fig. 1 schematisch das Prinzip der kontaktlosen Übertragung von Informationen von einem passiven Transponder zu einer Basisstation,
Fig. 2 schematisch einen grundsätzlichen Aufbau eines Demodulators mit zwei Zweigen,
Fig. 3 die Erzeugung von Flanken aus dem Demodulatorsignal und deren Auswertung in einem Entscheider,
Fig. 4 den grundsätzlichen Aufbau eines Entscheiders mit gegenseitiger Verriegelung der Flanken der beiden Zweige des Demodulators,
Fig. 5 ein detaillierteres Schaltbild eines Entscheiders nach Fig. 4,
Fig. 6 ein Zeitdiagramm verschiedener Signale in der Schaltung nach Fig. 5.

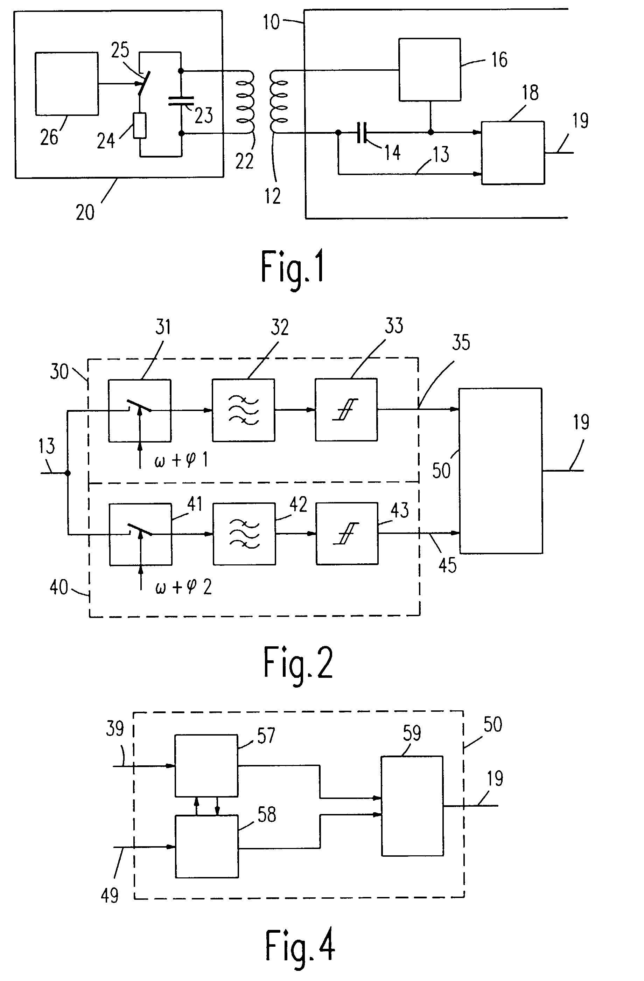

In Fig. 1 sind schematisch eine Basisstation 10 und ein Transponder 20 dargestellt, die über Spulen 12 bzw. 22 miteinander gekoppelt sind. In der Basisstation 10 ist ein Generator 16 zur Erzeugung eines Trägersignals enthalten, von dem ein Anschluß mit dem einen Ende der Spule 12 und ein Bezugsanschluß über einen Kondensator 14 mit dem anderen Ende der Spule 12 verbunden ist. Die Spule 12 und der Kondensator 14 bilden einen Reihenreschwingkreis, der auf die Frequenz des Trägersignals des Generators 16 abgestimmt ist.

Der Verbindungspunkt zwischen der Spule 12 und dem Kondensator 14 ist ebenso wie der Bezugsanschluß des Generators 16 mit Eingängen einer Demodulatoranordnung 18 verbunden, in der Änderungen des Stroms im Reihenschwingkreis ausgewertet werden, um an einem Ausgang 19 die zurückgewonnene Information abzugeben. Weitere Einrichtungen zur Verarbeitung des Signals am Ausgang 19 in der Basisstation 10 sind der Übersichtlichkeit halber nicht dargestellt.

Die Spule 22 des Transponders 20 ist parallel mit einem Kondensator 23 verbunden, wodurch ein Parallelschwingkreis entsteht, der im Idealfall genau auf die Frequenz des Generators 16 abgestimmt ist. Dieser Schwingkreis ist über einen Schalter 25 mit einer Impedanz 24 verbunden, wobei der Schalter 25 von einer Steueranordnung 26 angesteuert wird. Die Impedanz 24 ist zweckmäßig ein Widerstand oder eine Diodenanordnung. Die Gewinnung der elektrischen Energie zur Speisung der Steueranordnung 26 aus der am Schwingkreis entstehenden Spannung, wenn der Transponder 20 mit der Basisstation 10 gekoppelt ist, sowie die Demodulation von Informationen, die von der Basisstation 10 zum Transponder 20 beispielsweise durch Phasenmodulation übertragen wird, ist der Übersichtlichkeit halber nicht dargestellt.

Durch die Kopplung der beiden Spulen 12 und 22 ändert sich der in der Spule 12 und damit über den Kondensator 14 fließende Strom, wenn im Transponder 20 der Schalter 25 geschlossen wird. Diese Änderung des Stroms, die am Kondensator 14 eine Änderung der Spannung erzeugt, kann in der Demodulatoranordnung 18 ausgewertet werden, so daß auf diese Weise am Ausgang 19 ein die Stellung des Schalters 25 im Transponder angebendes Signal erhalten werden kann. Auf diese Weise werden Informationen vom Transponder, der selbst keine eigene Energieversorgung enthält, kontaktlos zur Basisstation 10 übertragen.

In Fig. 2 ist der grundsätzliche Aufbau einer Demodulatoranordnung aus einem Demodulator mit zwei Zweigen 30 und 40 und einem Entscheider 50 angegeben. Das von der Antennenspule der Basisstation abgeleitete Signal wird über die Leitung 13 in jedem der Zweige 30 und 40 einer Multiplizierschaltung 31 bzw. 41 zugeführt, die hier als eine Abtast- und Halteschaltung ausgeführt sind. Jede dieser Schaltungen enthält einen Schalter, und der Schalter der Schaltung 31 wird mit eine Abtastimpuls kurzzeitig geschlossen, der synchron mit der Trägerfrequenz ω auftritt, jedoch gegenüber dieser um einen ersten Phasenwinkel ϕ1 verschoben ist. Entsprechend wird der Schalter der Schaltung 41 durch einen periodischen Abtastimpuls geschlossen, der ebenfalls synchron mit der Trägerfrequenz ω auftritt, jedoch um einen anderen Phasenwinkel ϕ2 verschoben ist. Im einfachsten Fall ist ϕ1=0 und ϕ2=90°, so daß im Zweig 30 der Realteil und im Zweig 40 der Imaginärteil des Antennensignals auf der Leitung 13 ausgewertet wird.

Nachfolgend wird nur der Zweig 30 näher erläutert, da der Zweig 40 gleich aufgebaut ist und entsprechend arbeitet. Das Signal der Schaltung 31 wird einem Bandpaßfilter 32 zugeführt, das zum einen den Gleichanteil entfernt, da das durch die Belastungsmodulation vom Transponder in der Antennenspule 12 erzeugte Signal einem großen, praktisch konstanten Anteil überlagert ist. Außerdem wird durch das Filter 32 der Signalanteil der Trägerfrequenz ω weitgehend unterdrückt. Da die Modulation im Transponder derart erfolgt, daß die Stellung des Schalters 25 nur nach einer Vielzahl von Trägerschwingungen verändert wird, so daß die höchste Frequenz des modulierten Nutzsignals wesentlich niedriger ist als die Trägerfrequenz, ist das Filter 32 relativ einfach herzustellen.

Das Ausgangssignal des Filters 32 wird einer Digitalisierschaltung 33 zugeführt, die vorzugsweise als Schmitt-Trigger-Schaltung ausgeführt ist und aus dem analogen Signal des Filters 32 ein binäres Signal auf der Leitung 35 erzeugt. Dieses Signal ist im Idealfall ein Impulssignal, das die Schalterstellung des Schalters 25 im Trans ponder 20 wiedergibt, wenn auch mit einer kleinen, durch das Filter 32 erzeugten Zeitverschiebung.

Entsprechend wird im Zweig 40 das Signal der Schaltung 41 im Filter 42 gefiltert und in der Schaltung 43 in ein binäres Signal auf der Leitung 45 umgesetzt. Im Idealfall sind die Signale auf den Leitungen 35 und 45 nahezu synchron, jedoch sind allgemein die Amplituden der von den Filtern 32 und 42 abgegebenen Signale unterschiedlich, so daß die Schmitt-Trigger 33 und 43 etwas unterschiedlich schalten. Der Entscheider 50 muß nun so aufgebaut sein, daß aus diesen meistens zeitlich etwas gegeneinander verschobenen Impulsen, von denen einer der beiden auch ganz fehlen kann, ein eindeutiges Impulssignal auf der Leitung 19 erzeugt wird, das die Schalterstellung des Schalters 25 bzw. dessen Ansteuerung zuverlässig wiedergibt.

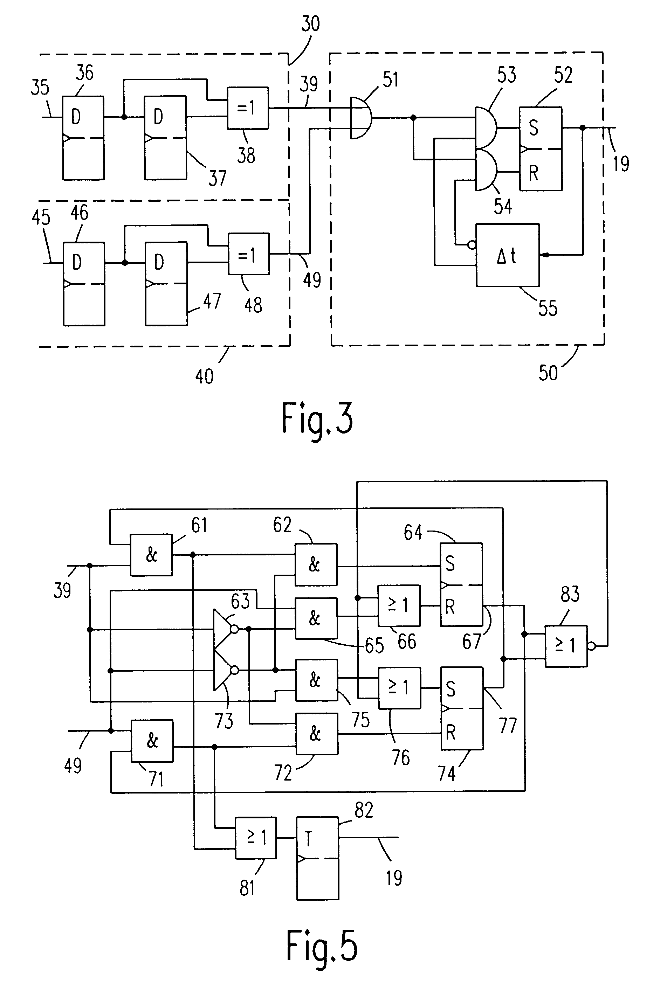

Eine dafür geeignete Schaltung ist in Fig. 3 dargestellt. Die beiden Zweige 30 und 40 sind um einige Elemente erweitert, die bei jeder Flanke eines Impulses auf der Leitung 35 bzw. 45 einen kurzen Impuls erzeugen. Diese zusätzlichen Elemente umfassen in jedem Zweig zwei D-Flipflops, die mit der Trägerfrequenz getaktet werden, und eine Exclusiv-ODER-Schaltung EXOR, die mit den Ausgängen beider Flipflops gekoppelt ist. Insbesondere im Zweig 30 wird das Impulssignal auf der Leitung 35 dem D-Eingang eines D-Flipflops 36 zugeführt, dessen Ausgang mit dem D-Eingang eines weiteren D-Flipflops 37 und mit einem Eingang eines EXOR 38 verbunden ist. Der andere Eingang des EXOR 38 ist mit dem Ausgang des D-Flipflops 37 verbunden. Die Flipflops 36 und 37 sind taktflankengesteuert, wobei das Taktsignal der Übersichtlichkeit halber in Fig. 3 nicht dargestellt ist.

Mit dem ersten Taktsignal nach dem Auftreten oder Verschwinden eines Impulses auf der Leitung 35 wird das D-Flipflop 36 umgeschaltet, so daß das EXOR 38 zwei unterschiedliche Signale an den Eingängen erhält und ein Ausgangssignal abgibt. Mit dem nächsten danach folgenden Taktsignal wird auch das D-Flipflop 37 umgeschaltet, und das EXOR 38 erhält zwei gleiche Eingangssignale, so daß kein Ausgangssignal erzeugt wird. In entsprechender Weise arbeiten auch die D-Flipflops 46 und 47 und das EXOR 48 im Zweig 40. Auf den Leitungen 39 und 49 treten daher nur kurze Impulse mit der Dauer einer Taktperiode auf, die jedoch gegeneinander um eine oder mehrere Taktperioden zeitverschoben sein können. Daraus muß der Entscheider 50 ein eindeutiges Impulssignal zurückgewinnen.

Dafür enthält der Entscheider 50 ein ODER-Gatter 51, dessen beide Eingänge mit den Leitungen 39 und 49 und dessen Ausgang mit den einen Eingängen von zwei UND-Gattern 53 und 54 verbunden sind. Die Ausgänge der UND-Gatter 53 und 54 sind mit dem S-Eingang bzw. dem R-Eingang eines getakteten R-S-Flipflops 52 verbunden. Die anderen Eingänge der UND-Gatter 53 und 54 sind mit einem Ausgang bzw. einem invertierenden Ausgang einer Verzögerungsanordnung 55 verbunden, deren Eingang mit dem Ausgang des Flipflops 52 verbunden ist. Die Verzögerungsanordnung 55 besteht beispielsweise aus einer Kette von in Reihe geschalteten taktgesteuerten Flipflops.

Für die Funktion des Entscheiders 50 in Fig. 3 wird zunächst angenommen, daß das Flipflop 52 ein niedriges Signal am Ausgang und damit auch auf der Leitung 19 erzeugt und daß die Verzögerungszeit der Verzögerungsanordnung 55 abgelaufen ist, so daß dem unteren Eingang des UND-Gatters ein hohes und dem unteren Eingang des UND-Gatters 54 ein niedriges Signal zugeführt wird. Wenn nun auf einer der beiden Leitungen 39 und 49 oder auch auf beiden gleichzeitig ein Impuls auftritt, wird dieser über das ODER-Gatter 51 und das UND-Gatter 53 dem S-Eingang des Flipflops 52 zugeführt, so daß mit dem nächsten Signal am Takteingang dieses Flipflop seinen Zustand wechselt und die Leitung 19 ein hohes Signal führt. Während der Verzögerungszeit der Verzögerungsanordnung 55 bleibt jedoch deren Ausgangszustand erhalten, so daß Impulse, die auf den Leitungen 39 und 49 zeitlich gegeneinander um weniger als die Verzögerungszeit verschoben sind, den Zustand des Flipflops 52 nicht ändern. Erst nach der Verzögerungszeit der Verzögerungsanordnung 55 ändert sich deren Ausgangszustand, so daß nun der untere Eingang des UND-Gatters 53 ein niedriges Signal und der untere Eingang des UND-Gatters 54 ein hohes Signal empfängt und ein danach auftretender Impuls auf den Leitungen 39 und 49 das Flipflop 52 wieder umschaltet. Die Verzögerungszeit der Verzögerungsanordnung 55 wird daher etwa gleich der halben minimalen Dauer der Impulse gewählt, mit der die Steueranordnung 26 im Transponder den Schalter 25 ansteuert, wobei diese minimale Impulsdauer in Anzahlen von Trägerschwingungen festgelegt ist.

Diese maximale Zeitverschiebung der Impulse auf den Leitungen 39 und 49 gegeneinander bei demselben vom Transponder ausgesandten Impuls kann jedoch unter bestimmten Bedingungen nicht zuverlässig eingehalten werden. In Fig. 4 ist daher schematisch ein Entscheider dargestellt, bei dem die Zeitverschiebung der Impulse gegeneinander praktisch nicht begrenzt ist. Dafür ist jede der Leitungen 39 und 49, auf denen die aus den Signalflanken abgeleiteten kurzen Impulse auftreten, mit einer zugehörigen Verriegelungsschaltung 57 bzw. 58 verbunden, die auch untereinander gekoppelt sind. Diese Verriegelungsschaltungen 57 und 58 sind derart aufgebaut, daß ein Impuls, der auf einer der beiden Leitungen 39 oder 49 zuerst auftritt, den nachfolgenden Impuls auf der anderen Leitung unterdrückt. Nur der nicht unterdrückte Impuls erscheint am Ausgang der jeweiligen Verriegelungsschaltung und wird einer Anordnung 59 mit einem Speicherglied zugeführt, das bei jedem eintreffenden Impuls seinen Signalzustand wechselt. Dadurch wird für jede Impulsflanke der demodulierten empfangenen Impulse auch nur eine Impulsflanke auf der Ausgangsleitung 19 erzeugt.

Ein Beispiel für ein Paar solcher Verriegelungsschaltungen, die sich gegenseitig verriegeln, ist in Fig. 5 dargestellt. Darin stellen die Elemente 61 bis 65 die Verriegelungsschaltung 57 in Fig. 4 und die Elemente 71 bis 75 die Verriegelungsschaltung 58 in Fig. 4 dar. Beide Verriegelungsschaltungen sind also untereinander gleich aufgebaut. Diese umfassen ein UND-Gatter 61 bzw. 71, von dem ein Eingang mit der Leitung 39 bzw. 49 verbunden ist und von dem ein zweiter Eingang ein Sperrsignal erhält, wie nachfolgend erläutert wird. Am Ausgang der Gatter 61 und 71 treten dann die nicht gesperrten Impulse auf, die über ein ODER-Gatter 81 einem T-Eingang eines getakteten T-Flipflops 82 zugeführt werden. Am Ausgang dieses Flipflops 82 und somit auf der Leitung 19 treten dann die zurückgewonnenen empfangenen Impulse auf. Die Elemente 81 und 82 realisieren zusammen den Block 59 in Fig. 4.

Der Ausgang des UND-Gatters 61 ist ferner mit einem Eingang eines UND-Gatters 62 verbunden, dessen anderer Eingang über einen Inverter 73 mit der Leitung 49 für die Impulse des anderen Demodulatorzweiges verbunden ist. Der Ausgang des UND-Gatters 62 ist mit einem S-Eingang eines getakteten R-S-Flipflops 64 verbunden.

Ferner ist ein UND-Gatter 65 vorhanden, dessen einer Eingang direkt mit der Leitung 49 und dessen anderer Eingang über einen Inverter 63 mit der Leitung 39 verbunden ist. Der Ausgang des UND-Gatters 65 ist über ein ODER-Gatter 66 mit einem R-Eingang des R-S-Flipflops 64 verbunden.

In entsprechender Weise ist der Ausgang des UND-Gatters 71 ferner mit einem Eingang eines UND-Gatters 72 verbunden, dessen anderer Eingang mit dem Ausgang des Inverters 63 und dessen Ausgang mit einem S-Eingang eines R-S-Flipflops 74 verbunden ist. Der eine Eingang eines UND-Gatters 75 ist direkt mit der Leitung 39 und der andere Eingang dieses UND-Gatters 75 ist mit dem Ausgang des Inverters 73 verbunden, und der Ausgang dieses UND-Gatters 75 führt über ein ODER-Gatter 76 auf den R-Eingang des Flipflops 74. Der Ausgang 67 des Flipflops 64 liefert das Sperrsignal für die untere Verriegelungsschaltung und ist mit dem einen Eingang des UND-Gatters 71 verbunden, und entsprechend liefert der Ausgang 77 des Flipflops 74 das Sperrsignal für die obere Verriegelungsschaltung und ist mit einem Eingang des UND-Gatters 61 verbunden. Die Ausgänge 67 und 77 sind ferner mit den beiden Eingängen eines NOR-Gatters 83 verbunden, das auf weitere Eingänge der ODER-Gatter 66 und 76 führt, um zu verhindern, daß beide Ausgänge 67 und 77 ein niedriges Potential führen, weil bei diesem Signalzustand beide Verriegelungsschaltungen anderenfalls blockiert wären.

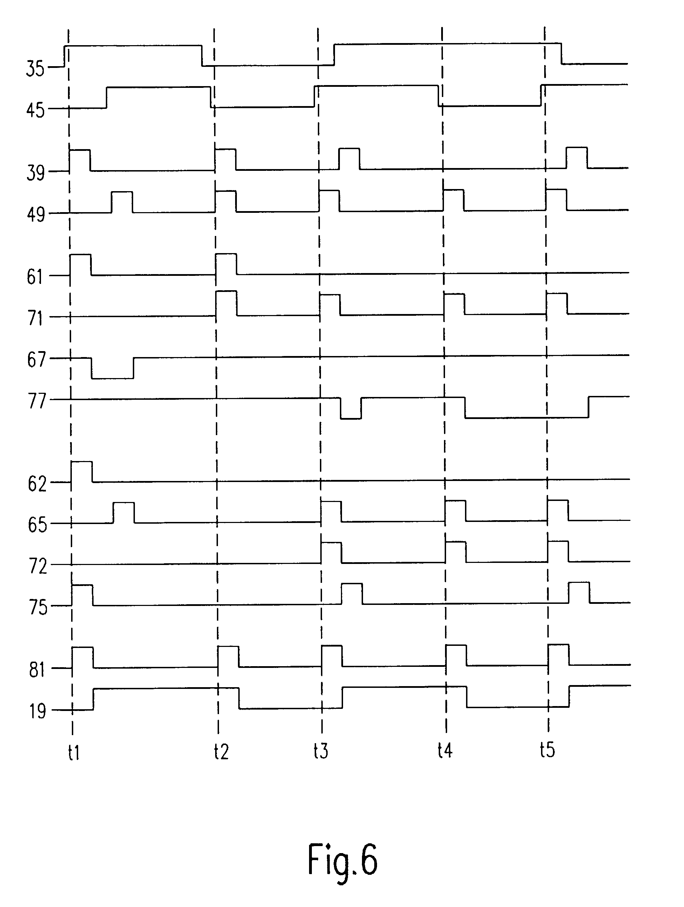

Die Funktion der in Fig. 5 dargestellten Schaltung soll anhand des Zeitdiagramms in Fig. 6 näher erläutert werden, und zwar für verschiedene Fälle der zeitlichen Verschiebung der Impulse auf den Leitungen 39 und 49 bzw. auch für den Fall, daß einer der Impulse ganz ausfällt. Die Zahlen an den einzelnen Signalverläufen geben die Elemente an, an deren Ausgang diese Signale auftreten, bzw. die Ausgänge selbst.

Ganz oben in Fig. 6 sind die demodulierten Impulse dargestellt, die auf den Leitungen 35 und 45 in Fig. 2 bzw. Fig. 3 auftreten. Darunter sind die Impulse dargestellt, die in dem linken Teil der Schaltung in Fig. 3 daraus abgeleitet sind und auf den Leitungen 39 und 49 erscheinen. Jeder dieser Impulse beginnt mit der ersten Taktsignalflanke, die nach der entsprechenden Impulsflanke auf der Leitung 35 bzw. 45 auftritt, und dauert genau eine Taktperiode lang, wie aus der Schaltung in Fig. 3 und deren vorangegangener Beschreibung erkennbar ist.

Zum Zeitpunkt t1, an dem der erste dargestellte Impuls auf der Leitung 39 auftritt, sind beide Flipflops 64 und 74 im zurückgesetzten Zustand, so daß beide Ausgänge 67 und 77 ein hohes Potential haben. Damit erscheint dieser erste Impuls am Ausgang des UND-Gatters 61 und auch am Ausgang des UND-Gatters 62, da das Signal auf der Leitung 49 niedrig ist und über den Inverter 73 das UND-Gatter 62 freigibt. Damit liegt am S-Eingang des Flipflops 64 ein hohes Potential, und mit dem nächsten Taktsignal schaltet das Flipflop 64 um, so daß der Ausgang 67 nun niedrig wird. Außerdem erscheint der erste Impuls auf der Leitung 39 am Ausgang des UND-Gatters 75, da die Leitung 49 zu diesem Zeitpunkt niedrig ist und das UND-Gatter 75 freigibt, und erreicht über ein ODER-Gatter 76 den R-Eingang eines R-S-Flipflops 74. Da dieses Flipflop jedoch als zurückgesetzt angenommen wurde, ändert sich mit dem nächsten Taktsignal der Zustand dieses Flipflops nicht.

Durch das niedrige Signal am Ausgang 67 wird das UND-Gatter 71 gesperrt, so daß an dessen Ausgang der nachfolgend auf der Leitung 49 auftretende Impuls nicht durchgelassen wird. Dieser Impuls erscheint jedoch am Ausgang des UND-Gatters 65, da nun das Signal auf der Leitung 39 wieder niedrig ist und über den Inverter 63 das UND-Gatter 65 freigibt. Damit liegt am R-Eingang des Flipflops 64 nun ein hohes Signal, und mit dem nächsten Taktsignal wird dieses Flipflop wieder umgeschaltet, so daß am Ausgang 67 wieder ein hohes Signal erscheint.

Auf diese Weise ist also der zuerst erscheinende Impuls durchgelassen worden, während der danach folgende Impuls gesperrt wird, und die Ausgänge 67 und 77 haben wieder ihren ursprünglichen Signalzustand, so daß nachfolgend der zuerst auftretende Impuls wieder durchgelassen werden kann.

Zum Zeitpunkt t2 treten in diesem Beispiel auf den Leitungen 39 und 49 gleichzeitig je ein Impuls auf. Beide Impulse werden nun von den UND-Gattern 61 und 71 durchgelassen, jedoch sind nun die UND-Gatter 62 und 72 ebenso wie die UND-Gatter 65 und 75 über die Inverter 63 bzw. 73 gesperrt, so daß die Flipflops 64 und 74 nun nicht ihren Zustand ändern. Die Tatsache, daß von den UND-Gattern 61 und 71 Impulse gleichzeitig durchgelassen werden, ist jedoch nicht störend, da diese Impulse durch das ODER-Gatter 81 zusammengefaßt werden und an dessen Ausgang als ein Impuls erscheinen, wie unten in Fig. 6 dargestellt ist. Da dieser Impuls an den T-Eingang des Flipflops 82 geliefert wird, schaltet dies mit dem nächsten folgenden Taktsignal um, so daß auf der Leitung 19 ein Signalverlauf erscheint, wie in Fig. 6 unten dargestellt ist.

Zum Zeitpunkt t3 erscheint zuerst auf der Leitung 49 ein Impuls, der vom UND-Gatter 71 und ebenfalls auch vom UND-Gatter 72 durchgelassen wird, da auf der Leitung 39 in diesem Augenblick ein niedriges Signal ist, das über den Inverter 63 das UND-Gatter 72 freigibt. Damit liegt am S-Eingang des Flipflops 74 ein hohes Signal, und mit dem nächsten Taktsignal schaltet dieses Flipflop um, so daß der Ausgang 77 nun niedrig wird und das UND-Gatter 61 sperrt. Der Impuls erscheint außerdem am Ausgang des UND-Gatters 65 und damit auch am R-Eingang des Flipflops 64, aber da dieses sich noch im rückgesetzten Zustand befindet, ändert sich dieser Zustand nicht nach dem nächsten Taktsignal. Durch das Sperren des UND-Gatters 61 kann an dessen Ausgang der nächste folgende Impuls auf der Leitung 39 nicht erscheinen. Dieser Impuls erscheint jedoch am Ausgang des UND-Gatters 75, da dieses über den Inverter 73 freigegeben ist, so daß am R-Eingang des Flipflops 74 ein hohes Signal liegt und das Flipflop umschaltet, so daß das Signal am Ausgang 77 wieder hoch wird.

Zum Zeitpunkt t4 tritt wieder ein Impuls auf der Leitung 49 auf, der von dem UND-Gatter 71 und ebenso von dem UND-Gatter 72 durchgelassen wird, so daß das Flipflop 74 wieder umschaltet und der Ausgang 77 wieder niedrig wird. Der vom UND-Gatter 65 ebenfalls durchgelassene Impuls ändert wie im vorhergehenden Fall den Zustand des Flipflos 64 nicht, da dieses noch im rückgesetzten Zustand ist.

Es wird in diesem Beispiel nun angenommen, daß auf der Leitung 39 zunächst kein Impuls erscheint, da das Signal auf der Leitung 35 konstant bleibt. Dies kann geschehen, wenn durch ungünstige Umstände sich die Modulation des Transponders nur im Realteil oder nur im Imaginärteil des Antennensignals auswirkt. Durch den fehlenden Impuls auf der Leitung 39 erscheint nun auch kein Impuls am Ausgang des UND-Gatters 65, und das Flipflop 74 bleibt im gesetzten Zustand, wobei das Signal am Ausgang 77 niedrig ist.

Zum Zeitpunkt t5 tritt auf der Leitung 49 erneut ein Impuls auf, der vom UND-Gatter 71 und auch vom UND-Gatter 72 durchgelassen wird, wodurch jedoch der Zustand des Flipflops 74 nicht beeinflußt wird, da es noch im gesetzten Zustand ist. Danach wird wieder ein auf der Leitung 39 auftretender Impuls angenommen, der von dem UND-Gatter 61 nicht durchgelassen wird, jedoch am Ausgang des UND-Gatters 75 auftritt. Dadurch wird mit dem nächsten Taktsignal das Flipflop 74 wieder zurückgeschaltet, und der Ausgang 77 geht wieder auf ein hohes Signal. Dadurch ist wieder der gleiche Zustand wie vor dem Zeitpunkt t1 wieder hergestellt, d.h. der nächste nach dem Zeitpunkt t5 folgende Impuls auf einer der beiden Leitungen 39 oder 49 wird wieder durchgelassen entsprechend den Erläuterungen bei den Zeitpunkten t1 bis t3.

Jeder durchgelassene Impuls erscheint am Ausgang des ODER-Gatters 81 und damit am T-Eingang des Flipflops 82, so daß am Ausgang 19 die vom Transponder übertragenen Signale wieder zurückgewonnen werden, selbst wenn in einem der beiden Zweige des Demodulators kein Signal bzw. keine Impulsflanke demoduliert wird.

## Patentansprüche

1. Verfahren zum Übertragen von Informationen von einem Transponder zu einer Basisstation, wobei in der Basisstation einer Antennenspule ein konstantes Trägersignal zugeführt wird und in dem induktiv mit der Basisstation gekoppelten Transponder ein von der Antennenspule ausgesandtes Feld gemäß der zu übertragenden Information gedämpft wird und in der Basisstation aus einem von der Antennenspule abgeleiteten Antennensignal die übertragene Information zurückgewonnen wird, dadurch gekennzeichnet,
daß aus dem Antennensignal zwei verschiedene Kombinationen von Realteil und Imaginärteil des Antennensignals getrennt demoduliert werden, daß beide Anteile getrennt digitalisiert werden und daß aus beiden digitalisierten Anteilen durch logische Verknüpfung die übertragene Information des Transponders zurückgewonnen wird.

2. Verfahren nach Anspruch 1, dadurch gekennzeichnet,
daß aus den Flanken beider digitalisierten Antennensignalanteile Impulse gebildet werden, daß der bezüglich einer Flanke des demodulierten Signals früher auftretende Impuls des einen Anteils den folgenden Impuls des anderen Anteils sperrt und daß aus dem nicht gesperrten Impuls die übertragene Information abgeleitet wird.

3. Verfahren nach Anspruch 1 oder 2, dadurch gekennzeichnet,
daß die Demodulation mit Hilfe von zwei gegeneinander um einen Teil einer ganzen Trägerschwingung gegeneinander phasenverschobenen Trägersignalen erfolgt.

4. Basisstation zum Empfangen einer von einem Transponder (20) ausgesendeten Information mit
- einen Generator (16) zum Erzeugen eines Trägersignals mit zumindest kurzzeitig konstanter Frequenz und Amplitude,
- eine erste Antennenspule (12), die mit dem Generator (16) gekoppelt ist,
- eine Demodulatoranordnung (18), die mit der Antennenspule (12) gekoppelt ist und die übertragene Information abgibt,
wobei der Transponder (20) eine zweite Antennenspule (22), die mit der ersten Antennenspule (12) induktiv koppelbar ist, und eine mit der zweiten Antennenspule (22) gekoppelte, gemäß einer zu übertragenden Information steuerbare Impedanz (24) enthält,
dadurch gekennzeichnet, daß die Demodulatoranordnung (18) aufweist
- zwei Zweige (30, 40) mit je einem Demodulator (32, 42), um in jeden Zweig eine andere Kombination von Realteil und Imaginärteil eines von der ersten Antennenspule (12) abgeleiteten Signals zu demodulieren, und mit je einem Diskriminator (36, 46), um aus jedem demodulierten Signal ein binäres Signal zu erzeugen,
- einen Entscheider (50), der mit beiden Zweigen (30, 40) gekoppelt ist, um aus einer Kombination beider binärer Signale die übertragene Information zu bilden und an einem Ausgang (19) der Anordnung abzugeben.

5. Basisstation nach Anspruch 4, dadurch gekennzeichnet,
daß der Diskriminator (36, 46) in jedem Zweig einen Flankendetektor (36, 37, 38; 46, 47, 48) enthält zum Erzeugen eines Impulses mit einer Impulsdauer wesentlich kürzer als der kürzeste Abstand der Flanken des binären Signals aus jeder Flanke des binären Signals des zugehörigen Zweiges (30, 40) und
daß der Entscheider (50) eine Kombinierschaltung (51, 81) mit zwei Eingängen für die Impulse beider Zweige (30, 40) und zum Abgeben eines kombinierten Impulses an einem Ausgang sowie eine bistabile Speicherschaltung (52, 82) enthält, die mit dem Ausgang der Kombinierschaltung (51, 81) gekoppelt ist und bei jedem kombinierten Impuls den Signalzustand an einem Ausgang wechselt, der mit dem Ausgang (19) der Anordnung gekoppelt ist.

6. Basisstation nach Anspruch 5, dadurch gekennzeichnet,
daß die Speicherschaltung als R-S-Flipflop (52) mit wenigstens einem Ausgang aufgebaut ist, dessen R- und S-Eingang je ein Gatter (53, 54) vorgeschaltet ist, wobei ein erster Eingang jedes Gatters (53, 54) mit dem Ausgang der Kombinierschaltung (51) und der zweite Ausgang jedes Gatters (53, 54) über eine Verzögerungsschaltung (55) mit dem Ausgang des R-S-Flipflops (52) gekoppelt ist und daß der Ausgang des R-S-Flipflops mit dem Ausgang (19) der Anordnung gekoppelt ist.

7. Basisstation nach Anspruch 5, dadurch gekennzeichnet,
daß der Entscheider (50) eine Verriegelungsschaltung (57, 58) für die Impulse beider Zweige (30, 40) aufweist, um einen ersten Impuls in einem Zweig freizugeben und einen danach folgenden zweiten Impuls im anderen Zweig zu sperren und danach einen dritten Impuls in einem der beiden Zweige freizugeben, und daß die Kombinierschaltung (59) die freigegebenen Impulse beider Zweige (30, 40) empfängt, um daraus die übertragene Information zu bilden und dem Ausgang (19) der Anordnung zuzuführen.

8. Basisstation nach Anspruch 7, dadurch gekennzeichnet,
daß die Verriegelungsschaltung (57, 58) zwei gleich aufgebaute Teile mit je einem Eingang für die Impulse eines anderen der beiden Zweige (30, 40) aufweist, wobei jeder Teil (57, 58) umfaßt
- ein erstes Gatter (61, 71) mit einem Ausgang und zwei Eingängen, von denen einer mit dem zugehörigen Eingang (39, 49) für die Impulse verbunden ist,
- ein R-S-Flipflop (64, 74) mit zwei Eingängen und wenigstens einem Ausgang, wobei der eine Eingang mit dem Ausgang des ersten Gatters (61, 71) und der Ausgang mit dem anderen Eingang des ersten Gatters (71, 61) des anderen Teils (58, 57) gekoppelt sind,
- ein zweites Gatter (66, 76) mit zwei Eingängen und einem Ausgang, wobei der eine Eingang mit dem zugehörigen Eingang (39, 49) für die Impulse und der andere Eingang mit dem Eingang (49, 39) des anderen Teils (58, 57) für die Impulse und der Ausgang mit dem anderen Eingang des R-S-Flipflops (64, 74) gekoppelt sind,
daß die Ausgänge der ersten Gatter (61, 71) mit den Eingängen der Kombinierschaltung (81) verbunden sind und daß die bistabile Speicherschaltung (82) ein T-Flipflop mit einem T-Eingang ist, der mit dem Ausgang der Kombinierschaltung (81) verbunden ist.

9. Basisstation nach Anspruch 8, dadurch gekennzeichnet,
daß in jedem Teil (57, 58) der Verriegelungsschaltung der Ausgang des ersten Gatters (61, 71) mit einem Eingang eines dritten Gatters (62, 72) gekoppelt ist, von dem ein zweiter Eingang mit dem Eingang (49, 39) des anderen Teils (58, 57) und von dem ein Ausgang mit dem einen Eingang des R-S-Flipflops (64, 74) gekoppelt ist.

10. Basisstation nach einem der Ansprüche 4 bis 9, dadurch gekennzeichnet, daß der Demodulator (31, 41) jedes Zweiges eine Abtast-Halte-Schaltung aufweist und die Abtast-Halte-Schaltungen in beiden Zweigen zu verschiedenen Zeitpunkten innerhalb jeder Schwingung des Trägersignals angesteuert werden.
